(19) Europäisches Patentamt
European Patent Office
Office européen des brevets

(11) Publication number: **0 284 139 B1**

# (12) EUROPEAN PATENT SPECIFICATION

(45) Date of publication of patent specification: **13.01.93**

(51) Int. Cl.[5]: **C08F 218/00**, G02B 1/04

(21) Application number: **88200459.1**

(22) Date of filing: **10.03.88**

The file contains technical information submitted after the application was filed and not included in this specification

## (54) Liquid polymerizable composition for the production of high refractive index optical articles.

(30) Priority: **16.03.87 IT 1971387**

(43) Date of publication of application:
**28.09.88 Bulletin 88/39**

(45) Publication of the grant of the patent:
**13.01.93 Bulletin 93/02**

(84) Designated Contracting States:
**AT BE CH DE ES FR GB GR LI LU NL SE**

(56) References cited:
**EP-A- 0 142 118**

**CHEMICAL ABSTRACTS, vol. 101, no. 26, December 1984, page 43, abstract no. 231646k, Columbus, Ohio, US**

**CHEMICAL ABSTRACTS, vol. 101, no. 14, October 1984, page 48, abstract no. 112082p, Columbus, Ohio, US**

(73) Proprietor: **ENICHEM SYNTHESIS S.p.A.**
**Via Ruggero Settimo 55**
**I-90139 Palermo(IT)**

(72) Inventor: **Renzi, Fiorenzo**
**Via Dante 1**
**I-20064 Gorgonzola, Milan(IT)**
Inventor: **Rivetti, Franco**
**Via Capitano G. Sella 41**
**I-36015 Schio, Vicenza(IT)**
Inventor: **Romano, Ugo**
**Via Fermi 12**
**I-20059 Vimercate, Milan(IT)**
Inventor: **Gagliardi, Claudio**
**Via Morandi 11/E**
**I-20097 San Donato Milanese, Milan(IT)**
Inventor: **Sgambato, Umberto**
**Via Martinengo 30**
**I-20139 Milan(IT)**

(74) Representative: **Roggero, Sergio et al**
**Ing. Barzanò & Zanardo Milano S.p.A. Via Borgonuovo 10**
**I-20121 Milano(IT)**

EP 0 284 139 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a liquid and polymerizable composition, suitable for producing optical articles having a high refractive index, a low light dispersion, and with improved mechanical and colour characteristics. The invention relates also to the optical articles obtained from said compositions.

In the sector of the organic glasses, the products from the polymerization of bis(allyl-carbonates) of diols, and, in particular, of bis(allyl-carbonate) of diethylene glycol are interesting, and namely in view of their optical and mechanical characteristics, which make them useful for the preparation of optical articles; F. Strain, "Encyclopaedia of Chemical Processing and Design", Vol. 1, Interscience Publishers, New York, 1964, pages 799-foll.

However, in the preparation of the optical articles from such polymerizates, relatively higher thicknesses than of the articles from inorganic glasses are required, due to the relatively low values of refractive index typical for said polymerizates. This is disadvantageous both from the viewpoint of the weight of the manufactured article, and also from the standpoint of its aesthetical characteristics, in addition to the difficulties of obtaining high-optical-quality, high-thickness articles.

Therefore, in order to overcome this problem, compositions were developed in the art, which are capable of supplying polymerizates having a relatively high refractive index. These compositions generally include polymerizable compounds of methacrylic, vinylic or allylic type, containing in their molecule an often halogenated aromatic moiety, such as disclosed, e.g. in EP-A-82 204, EP-A-142 118 and EP-A-142 921, DE-A-34 39 935, GB-A-2 089 523 and GB-A-2 155 939.

It was however observed that although on the one hand the use of such monomers allows an increase in value of refractive index to be achieved, on the other hand it causes a general decay in the characteristics of the relevant polymerizates, in particular as to colour, abrasion resistance, impact strength and resistance to ageing.

The purpose of the present invention is to overcome the drawbacks of the prior art by means of a liquid and polymerizable composition, suitable for producing high-refractive-index optical articles, with a low light dispersion, and endowed with improved characteristics as to impact strength and colour.

The invention, therefore, provides a liquid polymerizable composition for producing highly refractive optical articles, consisting of the following components:

(A) from 30% to 65% by weight of the product of the reaction of the diallylcarbonate with an aromatic-group containing diol, having the formula:

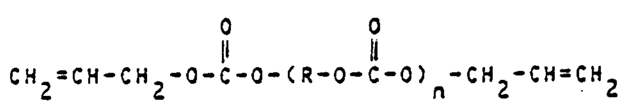

wherein R is a radical of an aromatic-group containing diol and is selected from:

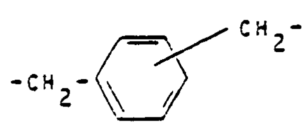

(either meta or para)

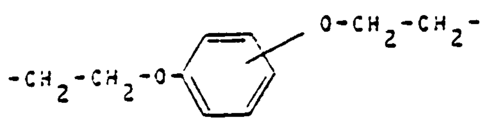

(either meta or para)

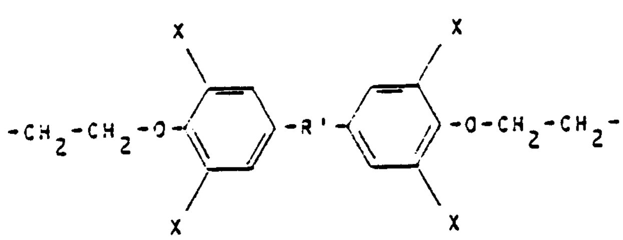

and in which R' is a radical selected from:

$-CH_2-$; 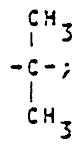 $-O-$;

X is a hydrogen atom, or a chlorine atom, or a bromine atom, and n is 1 or 2, in a molar ratio of the diallylcarbonate to the aromatic-group containing diol of 12:1, said reaction product consisting of from 80% to 90% by weight of monomer (n = 1) and the balance oligomers (average n = 2);

(B) from 15% to 65% by weight of a monomer, selected from:

diallyl orthophthalate, diallyl isophthalate, diallyl terephthalate, triallyl cyanurate and triallyl isocyanurate;

(C) from 5% to 40% by weight of the product of reaction of the diallylcarbonate and the diethylene glycol, having the formula:

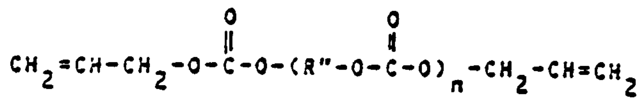

wherein R" is the radical of diethyleneglycol and n is 1 or 3, in a molar ratio of the diallylcarbonate to the diethyleneglycol of 2:1, said reaction product containing from 30% to 40% by weight of monomer (n = 1) and the balance oligomers (average n = 3), and an amount of a free-radical initiator of from 2% by weight to 8% by weight relative to the sum of the weights of the components (A), (B), and (C).

The (A) monomer/oligomer mixtures, rich in monomer, can be advantageously prepared by reacting diallyl-carbonate and a diol containing aromatic groups, by operating under transesterification conditions, with a molar ratio of the two reactants to each other equal to, or larger than, 6:1.

A preferred (A) component is the product of transesterification between diallyl-carbonate and 1,1'-isopropylidene-bis(4,4'-hydroxyethyl-benzene), in a mutual molar ratio of 12:1, which contains 80-90% of monomer, wherein R is the radical of the above indicated diol containing aromatic groups,and the residual percentage is constituted by the oligomer, wherein R has the above said meaning, and n is of approximately 2.

The (A) component of the composition of the present invention can be alternatively constituted by a diallyl-ester of a halogenated aromatic bicarboxy acid and the preferred compounds from this class of substances are diallyl-tetrachlorophthalate and diallyl-tetrabromophthalate.

The (B) component of the composition of the present invention is preferably selected from diallyl isophthalate and diallyl terephthalate.

The (C) component has the form of a mixture of monomer (n = 1) with one or more oligomer(s), provided that the monomer content in the mixture does not exceed 40% by weight.

These monomer/oligomers mixtures can be advantageously obtained by means of the reaction of diallyl carbonate with diethylene glycol, by operating under transesterification conditions, with a molar ratio of the two reactants to each other of approximately 2/1. Under these conditions, a mixture is obtained, which contains 30-40% by weight of monomer (n = 1), the residual percentage being constituted by oligomers with an average value of n of approximately 3.

The simultaneous presence of the (A), (B) and (C) components is essential in the composition of the present invention.

In particular, the presence of the (B) component makes it possible liquid compositions to be obtained, which have suitable viscosity values for the processing of the composition, and its transformation into optical articles. Furthermore, the presence of the (A) and (B) components makes it possible the desired values for the refractive index to be reached in the polymerizates. Finally, the presence of the (C) component is essential for obtaining polymerizates with adequate values of colour and of mechanical characteristics, in particular of impact strength.

In the preferred form of practical embodiment, the liquid and polymerizable composition of the present invention contains from 35 to 60% by weight of the (A) component, from 25 to 50% by weight of the (B) component, and from 5 to 25% by weight of the (C) component.

The liquid and polymerizable composition of the present invention contains furthermore one or more

polymerization initiator(s), soluble in the same composition, and capable of generating free radicals within a temperature range of from 30 to about 100°C.

Non limitative examples of such initiators are diisopropylperoxydicarbonate, dicyclohexylperoxydicarbonate, di-sec.-butyl-peroxydicarbonate, dibenzoyl peroxide and tert.-butyl-perbenzoate. In the preferred form of practical embodiment, the polymerization initiator is present in the composition in amounts comprised within the range of from 3 to 7 parts by weight per each 100 parts by weight of the total of (A), (B) and (C) components.

The liquid and polymerizable composition of the present invention may additionally contain one or more conventional additive(s), such as stabilizers, release agents, dyes, pigments, U.V. or I.R. absorbers and the like, with the total amount thereof being anyway not larger than 1 part by weight per each 100 parts by weight of the total of (A), (B) and (C) components.

The liquid and polymerizable composition of the present invention is transformed into optical articles by means of the mould polymerization (casting) process.

The polymerization is initiated by the free radicals generated by the decomposition of the polymerization initiators present in the same composition, by generally operating at temperatures of from 35 to 100 ° C. Under these conditions, the necessary time for the polymerization to procede to completeness is comprised within the range of from 2 to 100 hours.

The so-obtained articles show a high refractive index, a low light dispersion and good values of colour and of mechanical characteristics, as it will be evident from the following experimental examples, which are reported for the purpose of exemplifying the invention without limiting it.

In said examples, the liquid compositions are prepared, the polymerization initiator dicyclohexylperoxydicarbonate (DCPD) is added, and the resulting compositions are polymerized inside glass moulds assembled with a flexible gasket of plastified polyvinylchloride, which determines the thickness of the polymeric manufactured article. In particular, flat sheets having a thickness of 1.4 mm and 3.0 mm, and neutral lenses having a thickness of 2.0 mm, are prepared.

The polymerization takes place inside a forced-circulation oven, at the temperature of 48 ° C for 72 hours.

On the hardened samples, the characteristics are determined, which relate to:

- refractive index ($n_D^{20}$ ) and light dispersion factor, as measured by means of the Abbe refractometer (ASTM D-542);
- Haze and transmittance % in the visible range, measured by the Hazegard XL-211 of Gardner (ASTM D-1003);
- Yellow Index (YI), defined as:

$$YI = \frac{100}{Y} (1.277\ X - 1.06\ Z)$$

  measured by XL-805 colorimeter by Gardner (ASTM D-1925);
- Specific gravity as g/cm$^3$, determined by hydrostatic balance at the temperature of 25°C (ASTM D-792);
- Rockell hardness (M), measured by Rockwell durometer (ASTM D-785);
- Tensile strength and flexural elastic modulus, measured by INSTRON dynamometer (ASTM D-790);
- IZOD impact strength without notch (ASTM D-256, modified);
- Thermal distorsion temperature (HDT) (ASTM D-648).

Examples 1-7

In these examples, as the (A) component, the reaction product of diallyl carbonate and 1,1'-isopropylidene-bis(4,4'-hydroxyethylbenzene) in a mutual molar ratio of 12/1 is used, with the reaction being carried out under such general conditions as disclosed in European patent application publ. No. 35304. This (A) component is constituted for approximately 85% by weight by the monomer (n = 1), wherein R is the radical of the above indicated diol, and the residual percentage thereof is constituted by the oligomer wherein n is approximately equal to 2.

As the (B) component, diallyl terephthalate is used.

As the (C) component, the reaction product of diallyl carbonate and diethylene glycol in a mutual molar

ratio of 2/1 is used, with the reaction being carried out under such general conditions as disclosed in European patent application publ. No. 35304. In this (C) component the average value of $\bar{n}$ is 3, and its monomer content (n = 1) is approximately 35% by weight.

As the free-radical initiator, in the composition dicyclohexylperoxydicarbonate (DCPD) is used, in an amount of 6% by weight (approximately 6.6% by weight per each 100 parts by weight of the sum of (A), (B) and (C) components).

The liquid compositions prepared are reported in following Table 1.

In this Table, Example 1 is a comparative example.

Table 1

| Example No. | Components (% by weight) | | | |
|---|---|---|---|---|
| | A | B | C | DCPD |
| 1 | 54 | 40 | -- | 6 |
| 2 | 47 | 40 | 7 | 6 |
| 3 | 40 | 40 | 14 | 6 |
| 4 | 34 | 40 | 20 | 6 |
| 5 | 54 | 35 | 5 | 6 |
| 6 | 49 | 35 | 10 | 6 |
| 7 | 52 | 35 | 7 | 6 |

In the following Table 2, the characteristics of refractive index ($n_D^{20}$), of specific gravity at 20°C, as g/cm$^3$, and of kinematic viscosity at 25°, as m$^2$/s (cSt), of the so obtained liquid compositions, are reported. The determinations are carried out on the compositions in the absence of peroxide.

Table 2

| Example No. | Refractive Index | Specific Gravity | Kinematic Viscosity |
|---|---|---|---|
| 1 | 1.5331 | 1.145 | 0,000131 (131 cSt) |
| 2 | 1.5275 | 1.150 | 0,000105 (105 cSt) |
| 3 | 1.5200 | 1.150 | 0,000086 (86 cSt) |
| 4 | 1.5130 | 1.154 | 0,000062 (62 cSt) |
| 5 | 1.5293 | -- | 0,000144 (144 cSt) |
| 6 | 1.5256 | -- | 0,000129 (129 cSt) |
| 7 | 1.5270 | -- | 0,000135 (135 cSt) |

The compositions of Examples from 1 to 7 are polymerized to form flat sheets having a tickness of 3 mm, by operating according to the above shown modalities, and on such articles the characteristics as reported in Table 3 are determined, besides the light dispersion factors, which resulted of 33 (Example 1); 33 (Example 2); 34 (Example 3); 35.2 (Example 4); 33 (Example 5); 32.9 (Example 6); and 34 (Example 7).

Table 3

| Example No. | 1 | 2 | 3 | 4 | 5 | 6 | 7 |
|---|---|---|---|---|---|---|---|
| Specific Gravity (25°C; g/cm$^3$) | 1.2389 | 1.2461 | 1.2526 | 1.2592 | 1.2427 | 1.2457 | 1.2445 |
| Shrinkage (%) | 7.5 | 7.7 | 8.2 | 8.4 | - | - | - |
| Refractive Index ($n_D^{20}$) | 1.5640 | 1.5602 | 1.5555 | 1.5519 | 1.5606 | 1.5570 | 1.5586 |
| Yellow Index | 1.87 | 1.87 | 1.86 | 1.83 | 1.46 | 1.52 | 1.54 |
| Haze (%) | 0.15 | 0.18 | 0.14 | 0.12 | 0.15 | 0.17 | 0.20 |
| Transmittance Within Visible Wavelength Range (%) | 91.5 | 91.6 | 91.5 | 91.5 | 91.3 | 91.4 | 91.4 |
| Rockwell Hardness (M) | 105 | 106 | 105 | 105 | 101 | 101 | 100 |
| Flexural Modulus (MPa) | 2400 | 2200 | 2200 | 2150 | 2200 | 2100 | 2200 |
| Flexural Strength (MPa) | 90 | 76 | 77 | 71 | 83 | 75 | 80 |
| Impact Strength - Without Notch (kJ/m$^2$) | 7.1 | 10.4 | 8.1 | 10.9 | 9.9 | 11.2 | 10 |
| Thermal Distorsion Temperature (HDT) (°C) | 56.9 | 58.2 | 60.2 | 62.1 | 53.2 | 54.0 | 54.0 |

Furthermore, the liquid compositions of the Examples from 1 to 7 are transformed by polymerization into lenses of 2.0 mm of thickness, and these lenses are submitted to the test of breakage by means of a steel ball made fall down from a height of 1.27 m. The results of this test are reported in following Table 4, in which the number of broken lenses vs. the number of lenses tested under the various conditions is reported.

Table 4

| Example No. | Ball Weight (g) 16.3 | 18.8 | 21.7 | 24.8 | 44.7 |
|---|---|---|---|---|---|
| 1 | 1/5 | 1/4 | 1/3 | 1/2 | 0/1 |
| 2 | 0/2 | 1/2 | 0/1 | 1/1 | - |
| 3 | 0/2 | 1/2 | 0/1 | 0/1 | 1/1 |
| 4 | 0/5 | 2/5 | 0/3 | 1/3 | 2/2 |
| 5 | 0/5 | 0/5 | 2/5 | 1/3 | 1/2 |
| 6 | 0/5 | 0/5 | 0/5 | 0/5 | 1/5 |
| 7 | 0/4 | 0/4 | 0/4 | 0/4 | 1/4 |

Examples 8-11

Liquid compositions are prepared, which contain as the (A) and (C) components those components as reported in Examples 1-7, and diallyl isophthalate as the (B) component. These compositions are reported in Table 5.

Table 5

| Example No. | Components (% by Weight) A | B | C | DCPD |
|---|---|---|---|---|
| 8 | 50 | 40 | 5 | 5 |
| 9 | 45 | 40 | 10 | 5 |
| 10 | 40 | 45 | 10 | 5 |
| 11 | 49 | 35 | 10 | 6 |

The so-obtained compositions are polymerized to yield flat sheets of 1.4 mm of thickness. The characteristics of these manufactured articles are reported in Table 6.

Table 6

| Example No. | 8 | 9 | 10 | 11 |
|---|---|---|---|---|
| Refractive Index ($n_D^{20}$) | 1.5622 | 1.5588 | 1.5596 | 1.5573 |
| Yellow Index | 1.18 | 1.15 | 1.22 | 0.99 |
| Rockwell (M) Hardness | 82 | 89 | 87 | 89 |
| Haze (%) | 0.29 | 0.30 | 0.26 | 0.16 |
| Transmittange Within Visible Wavelength Range (%) | 91.7 | 91.8 | 91.9 | 91.8 |

Examples 12-14

Liquid compositions are prepared, which contain as the (A) and (C) components those components reported in Examples 1-7, and as the (B) component, a mixture of diallyl terephthalate (B1) and triallyl

cyanurate (B2). These compositions are reported in Table 9.

Table 9

| Example No. | Components (% by weight) | | | | |
|---|---|---|---|---|---|
| | A | B1 | B2 | C | DCPD |
| 12 | 49 | 20 | 15 | 10 | 6 |
| 13 | 44 | 20 | 15 | 15 | 6 |
| 14 | 34 | 25 | 15 | 20 | 6 |

The so-obtained liquid compositions, are polymerized to yield flat sheets of 1.4 mm of thickness. The characteristics of these manufactured articles are reported in Table 10.

Table 10

| Example No. | 17 | 18 | 19 |
|---|---|---|---|
| Refractive Index ($n_D^{20}$ ) | 1.5571 | 1.5544 | 1:5510 |
| Yellow Index | 1.40 | 1.45 | 2.85 |
| Rockwell (M) Hardness | 101 | 102 | 106 |
| Haze (%) | 0.14 | 0.15 | 0.15 |
| Transmittance Within Visible Wavelength Range (%) | 91.8 | 91.8 | 91.9 |

Examples 15 and 16

A liquid composition is prepared, which contains as its (A), (B) and (C) components, those components as reported in Examples 8-11 (Example 20). For comparative purposes, a composition is prepared, which contains the (A) and (B) components are reported in Examples 8-11 (Example 21).

These compositions are reported in Table 11.

Table 11

| Example No. | A | B | C | DCPD |
|---|---|---|---|---|
| 15 | 52 | 35 | 7 | 6 |
| 16 | 54 | 40 | -- | 6 |

The so-obtained liquid compositions are polymerized as flat sheets of 3.0 mm of thickness, and the characteristics of these manufactured articles are reported in Table 12.

Table 12

| Example No. | 15 | 16 |
|---|---|---|
| Specific Gravity (25°C; g/cm$^3$) | 1.2470 | 1.2428 |
| Shrinkage (%) | -- | -- |
| Refractive Index ($n_D^{20}$ ) | 1.5589 | 1.5644 |
| Yellow Index | 2.02 | 2.35 |
| Haze (%) | 0.25 | 0.28 |
| Transmittance Within the Visible Range (%) | 91.4 | 91.3 |
| Rockwell Hardness (M) | 106 | 108 |
| Impact Strength, Irod Without Notch (kJ/m$^2$) | 17.2 | 12.5 |
| Thermal Distorsion Temperature (°C) | 53 | 56 |

## Claims

### Claims for the following Contracting States : AT, BE, CH, DE, FR, GB, GR, LI, LU, NL, SE

**1.** A liquid polymerizable composition for producing highly refractive optical articles, consisting of the following components:

(A) from 30% to 65% by weight of the product of the reaction of the diallylcarbonate with an aromatic-group-containing diol, having the formula:

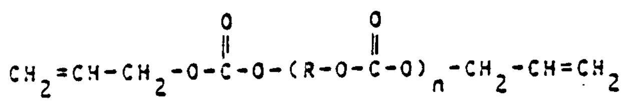

wherein R is a radical of an aromatic-group-containing diol and is selected from:

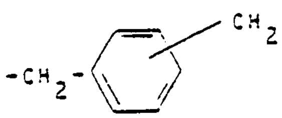

(either meta or para)

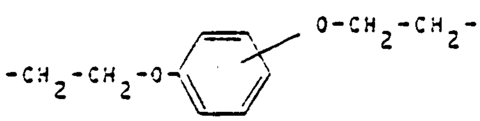

(either meta or para)

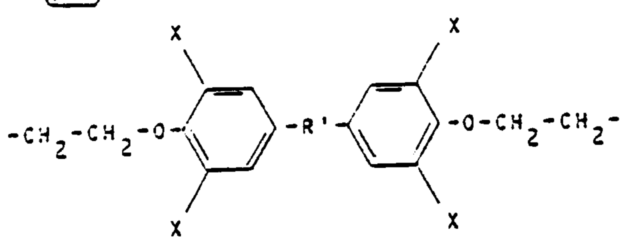

and in which R' is a radical selected from:

$-CH_2-$; 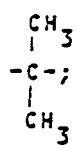 $-O-$;

X is a hydrogen atom, or a chlorine atom, or a bromine atom, and n is 1 or 2, in a molar ratio of the diallylcarbonate to the aromatic-group-containing diol of 12:1 said reaction product consisting of from 80% to 90% by weight of monomer (n = 1) and the balance oligomers (average n = 2);

(B) from 15% to 65% by weight of a monomer, selected from:

diallyl orthophthalate, diallyl isophthalate, diallyl terephthalate, triallyl cyanurate and triallyl isocyanurate;

(C) from 5% to 40% by weight of the product of reaction of the diallylcarbonate and the diethylene glycol, having the formula:

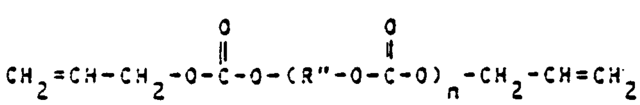

wherein R" is the radical of diethyleneglycol and n is 1 or 3 in a molar ratio of the diallylcarbonate to the diethyleneglycol of 2:1, said reaction product containing from 30% to 40% by weight of monomer (n = 1) and the balance oligomers (average n = 3), and

an amount of a free-radical initiator of from 2% by weight to 8% by weight relative to the sum of

the weights of the components (A), (B), and (C).

2. Composition according to Claim 1, wherein the aromatic-group containing diol is 1,1-isopropylidene-bis-(4,4'-hydroxyethylbenzene).

3. Composition according to Claim 1, wherein component (A) is contained in a percentage of from 35% to 60% by weight, component (B) is contained in a percentage of from 25% to 50% by weight,and component (C) is contained in a percentage of from 5% to 25% by weight.

4. Composition according to Claim 1, wherein the amount of free-radical initiator is from 3% by weight to 7% by weight relative to the sum of the weights of the components (A), (B), and (C).

5. Composition according to Claim 1, wherein the free-radical initiator is selected from:
diisopropyl peroxy dicarbonate,
dicyclohexyl-peroxy-dicarbonate
di-sec.butyl-peroxy-dicarbonate;
dibenzoyl peroxide, and
tert.butyl-perbenzoate.

6. Composition according to Claim 1, wherein a maximum amount of 1% by weight relative to the sum of the weights of the components (A), (B), and (C) of additives selected from stabilizers, release agents, pigments, UV-absorbers, and IR-absorbers is added to said composition.

7. Process for producing highly refractive optical articles comprising the step of polymerizing the composition defined in Claim 1 at a temperature of from 35°C to 100°C for a time of from 2 to 100 hours.

8. Optical articles whenever produced by the process of Claim 7.

**Claims for the following Contracting State : ES**

1. Process for preparing a liquid polymerizable composition for producing highly refractive optical articles, characterized by combining the following components:
(A) from 30% to 65% by weight of the product of the reaction of the diallylcarbonate with an aromatic-group containing diol, having the formula:

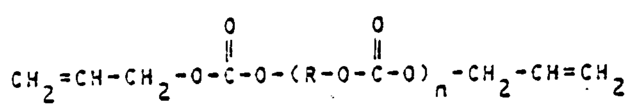

wherein R is a radical of an aromatic-group containing diol and is selected from:

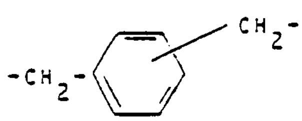

(either meta or para)

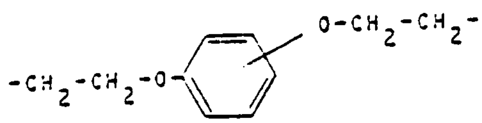

(either meta or para)

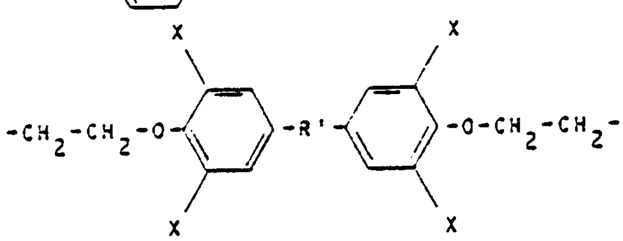

and in which R' is a radical selected from:

$-CH_2-$;  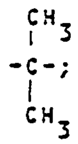  $-O-$;

X is a hydrogen atom, or a chlorine atom, or a bromine atom, and n is 1 or 2, in a molar ratio of the diallylcarbonate to the aromatic-group containing diol of 12:1 said reaction product consisting of from 80% to 90% by weight of monomer (n = 1) and the balance oligomers (average n = 2);

(B) from 15% to 65% by weight of a monomer, selected from:

diallyl orthophthalate, diallyl isophthalate, diallyl terephthalate, triallyl cyanurate and triallyl isocyanurate;

(C) from 5% to 40% by weight of the product of reaction of the diallylcarbonate and the diethylene glycol, having the formula:

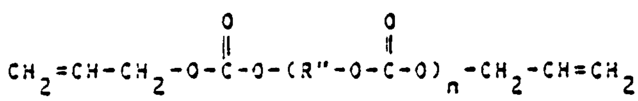

wherein R'' is the radical of diethyleneglycol and n is 1 or 3, in a molar ratio of the diallylcarbonate to the diethyleneglycol of 2:1, said reaction product containing from 30% to 40% by weight of monomer (n = 1) and the balance oligomers (average n = 3), and

an amount of a free-radical initiator of from 2% by weight to 8% by weight relative to the sum of the weights of the components (A), (B), and (C), and polymerizing the reaction mixture so prepared.at a temperature of from 35° C to 100° C for a time of from 2 to 100 hours.

**2.** Process according to Claim 1, characterized in that the aromatic-group containing diol is 1,1-isopropylidene-bis(4,4'-hydroxyethylbenzene).

**3.** Process according to Claim 1, characterized in that component (A) is contained in a percentage of from 35% to 60% by weight, component (B) is contained in a percentage of from 25% to 50% by weight,and component (C) is contained in a percentage of from 5% to 25% by weight.

**4.** Process according to Claim 1, characterized in that the amount of free-radical initiator is from 3% by weight to 7% by weight relative to the sum of the weights of the components (A), (B), and (C).

**5.** Process according to Claim 1, characterized in that the free-radical initiator is selected from:
diisopropyl-peroxy-dicarbonate,
dicyclohexyl-peroxy-dicarbonate
di-sec.butyl-peroxy-dicarbonate;
dibenzoyl peroxide, and
tert.butyl-perbenzoate.

**6.** Process according to Claim 1, characterized in that a maximum amount of 1% by weight relative to the sum of the weights of the components (A), (B), and (C) of additives selected from stabilizers, release agents, pigments, UV-absorbers, and IR-absorbers is introduced in the reaction mixture.

**Patentansprüche**
**Patentansprüche für folgende Vertragsstaaten : AT, BE, CH, DE, FR, GB, GR, LI, LU, NL, SE**

**1.** Flüssige, polymerisierbare Zusammensetzung zur Erzeugung stark lichtbrechender optischer Artikel, bestehend aus den folgenden Komponenten:

(A) 30 bis 65 Gew.% des Reaktionsprodukts von Diallylcarbonat mit einem eine aromatische Gruppe enthaltenden Diol der Formel

$$CH_2=CH-CH_2-O-\overset{O}{\overset{\|}{C}}-O-(R-O-\overset{O}{\overset{\|}{C}}-O)_n-CH_2-CH=CH_2$$

worin R ein Rest eines eine aromatische Gruppe enthaltenden Diols ist und ausgewählt ist unter

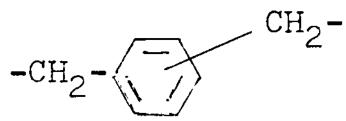 (entweder meta oder para)

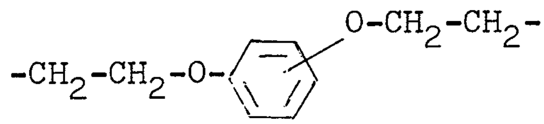 (entweder meta oder para)

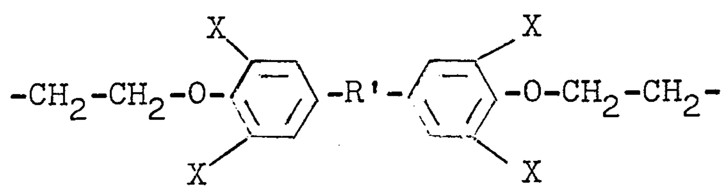

und worin R' für einen Rest steht, ausgewählt unter

$$-CH_2-; \qquad -\underset{CH_3}{\overset{CH_3}{C}}- \quad ; \qquad -O-;$$

X ein Wasserstoff- oder ein Chlor- oder ein Bromatom bedeutet und n für 1 oder 2 steht, in einem Molverhältnis des Diallylcarbonats zu dem eine aromatische Gruppe enthaltenden Diol von 12:1, wobei das Reaktionsprodukt aus 80 bis 90 Gew.% Monomerem (n = 1) und für den Rest aus Oligomeren (im Durchschnitt n = 2) besteht;
(B) 15 bis 65 Gew.% eines Monomeren, ausgewählt unter: Diallylorthophthalat, Diallylisophthalat, Diallylterephthalat, Triallylcyanurat und Triallylisocyanurat;
(C) 5 bis 40 Gew.% des Reaktionsprodukts von Diallylcarbonat und Diethylenglykol der Formel

$$CH_2=CH-CH_2-O-\overset{O}{\overset{\|}{C}}-O-(R''-O-\overset{O}{\overset{\|}{C}}-O)_n-CH_2-CH=CH_2$$

worin R'' der Rest von Diethylenglykol ist und n für 1 oder 3 steht, in einem Molverhältnis des Diallylcarbonats zu dem Diethylenglykol von 2:1, wobei das Reaktionsprodukt 30 bis 40 Gew.% Monomeres (n = 1) und für den Rest Oligomeres (im Durchschnitt n = 3) enthält; und

eine Menge eines freie Radikale bildenden Initiators von 2 Gew.% bis 8 Gew.%, bezogen auf die Summe der Gewichte der Komponenten (A), (B) und (C).

**2.** Zusammensetzung gemäß Anspruch 1, worin das eine aromatische Gruppe enthaltende Diol 1,1-Isopropyliden-bis-(4,4'-hydroxyethylbenzol) ist.

**3.** Zusammensetzung gemäß Anspruch 1, worin die Komponente (A) in einem Prozentanteil von 35 bis 60

Gew.%, die Komponente (B) in einem Prozentanteil von 25 bis 50 Gew.% und die Komponente (C) in einem Prozentanteil von 5 bis 25 Gew.% enthalten ist.

4. Zusammensetzung gemäß Anspruch 1, worin die Menge des freie Radikale bildenden Initiators 3 Gew.% bis 7 Gew.%, bezogen auf die Summe der Gewichte der Komponenten (A), (B) und (C), beträgt.

5. Zusammensetzung gemäß Anspruch 1, worin der freie Radikale bildende Initiator ausgewählt ist unter
Diisopropylperoxydicarbonat,
Dicyclohexylperoxydicarbonat,
Di-sek.-butylperoxydicarbonat,
Dibenzoylperoxid und
tert.-Butylperbenzoat.

6. Zusammensetzung gemäß Anspruch 1, worin eine maximale Menge von 1 Gew.%, bezogen auf die Summe der Gewichte der Komponenten (A), (B) und (C), an Additiven, ausgewählt unter Stabilisatoren, Freigabemitteln, Pigmenten, UV-Absorbern und IR-Absorbern, der Zusammensetzung zugesetzt wird.

7. Verfahren zur Herstellung stark lichtbrechender optischer Artikel, umfassend die Stufe der Polymerisation der in Anspruch 1 definierten Zusammensetzung bei einer Temperatur von 35 bis 100°C während einer Dauer von 2 bis 100 Stunden.

8. Optische Artikel, hergestellt nach dem Verfahren des Anspruchs 7.

**Patentansprüche für folgenden Vertragsstaat : ES**

1. Verfahren zur Herstellung einer flüssigen, polymerisierbaren Zusammensetzung für die Erzeugung von stark lichtbrechenden optischen Artikeln, gekennzeichnet durch Kombinieren der folgenden Komponenten:
(A) 30 bis 65 Gew.% des Reaktionsproduktes von Diallylcarbonat mit einem eine aromatische Gruppe enthaltenden Diol der Formel

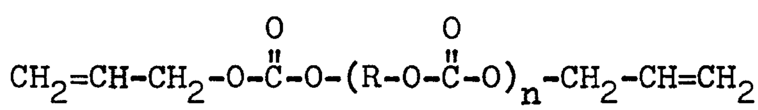

worin R ein Rest eines eine aromatische Gruppe enthaltenden Diols ist und ausgewählt ist unter

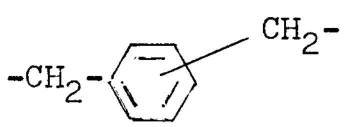

(entweder meta oder para)

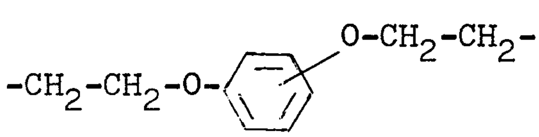

(entweder meta oder para)

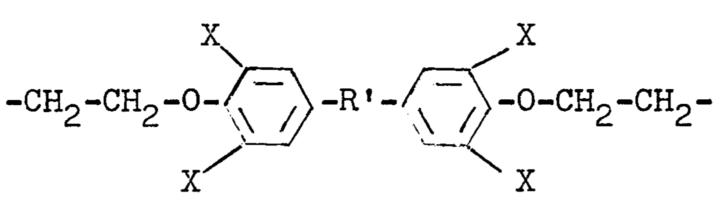

und worin R' für einen Rest steht, ausgewählt unter

$$-CH_2-; \quad -\underset{CH_3}{\overset{CH_3}{C}}- \quad ; \quad -O-;$$

X ein Wasserstoff- oder ein Chlor- oder ein Bromatom bedeutet und n für 1 oder 2 steht, in einem Molverhältnis des Diallylcarbonats zu dem eine aromatische Gruppe enthaltenden Diol von 12:1, wobei das Reaktionsprodukt aus 80 bis 90 Gew.% Monomerem (n = 1) und für den Rest aus Oligomeren (im Durchschnitt n = 2) besteht;

(B) 15 bis 65 Gew.% eines Monomeren, ausgewählt unter: Diallylorthophthalat, Diallylisophthalat, Diallylterephthalat, Triallylcyanurat und Triallylisocyanurat;

(C) 5 bis 40 Gew.% des Reaktionsprodukts von Diallylcarbonat und Diethylenglykol der Formel

$$CH_2=CH-CH_2-O-\overset{O}{\overset{\|}{C}}-O-(R''-O-\overset{O}{\overset{\|}{C}}-O)_n-CH_2-CH=CH_2$$

worin R'' der Rest von Diethylenglykol ist und n für 1 oder 3 steht, in einem Molverhältnis des Diallylcarbonats zu dem Diethylenglykol von 2:1, wobei das Reaktionsprodukt 30 bis 40 Gew.% Monomeres (n = 1) und für den Rest Oligomeres (im Durchschnitt n = 3) enthält; und

eine Menge eines freie Radikale bildenden Initiators von 2 Gew.% bis 8 Gew.%, bezogen auf die Summe der Gewichte der Komponenten (A), (B) und (C), und Polymerisieren der so hergestellten Reaktionsmischung bei einer Temperatur von 35 bis 100°C während einer Dauer von 2 bis 100 Stunden.

**2.** Verfahren gemäß Anspruch 1, dadurch gekennzeichnet, daß das eine aromatische Gruppe enthaltende Diol 1,1-Isopropyliden-bis-(4,4'-hydroxyethylbenzol) ist.

**3.** Verfahren gemäß Anspruch 1, dadurch gekennzeichnet, daß die Komponente (A) in einem Prozentanteil von 35 bis 60 Gew.%, die Komponente (B) in einem Prozentanteil von 25 bis 50 Gew.% und die Komponente (C) in einem Prozentanteil von 5 bis 25 Gew.% enthalten ist.

**4.** Verfahren gemäß Anspruch 1, dadurch gekennzeichnet, daß die Menge des freie Radikale bildenden Initiators 3 Gew.% bis 7 Gew.%, bezogen auf die Summe der Gewichte der Komponenten (A), (B) und (C), beträgt.

**5.** Verfahren gemäß Anspruch 1, dadurch gekennzeichnet, daß der freie Radikale bildende Initiator ausgewählt ist unter
Diisopropylperoxydicarbonat,
Dicyclohexylperoxydicarbonat,
Di-sek.-butylperoxydicarbonat,
Dibenzoylperoxid und
tert.-Butylperbenzoat.

**6.** Verfahren gemäß Anspruch 1, dadurch gekennzeichnet, daß eine maximale Menge von 1 Gew.%, bezogen auf die Summe der Gewichte der Komponenten (A), (B) und (C), an Additiven, ausgewählt unter Stabilisatoren, Freigabemitteln, Pigmenten, UV-Absorbern und IR-Absorbern, in die Reaktionsmischung eingebracht wird.

**Revendications**

**Revendications pour les Etats contractants suivants : AT, BE, CH, DE, FR, GB, GR, LI, LU, NL, SE**

**1.** Composition liquide polymérisable, destinée à la production d'articles optiques hautement réfringents, constituée des composants suivants :

(A) de 30 % à 65 % en poids du produit de la réaction du carbonate de diallyle avec un diol contenant un groupe aromatique, pré-sentant la formule :

$CH_2 = CH\text{-}CH_2\text{-}O\text{-}CO\text{-}O\text{-}(R\text{-}O\text{-}CO\text{-}O\text{-})_n\text{-}CH_2\text{-}CH = CH_2$

dans laquelle R est un radical d'un diol contenant un groupe aromatique et est choisi parmi

(méta ou para) 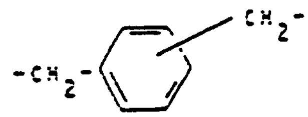

(méta ou para) 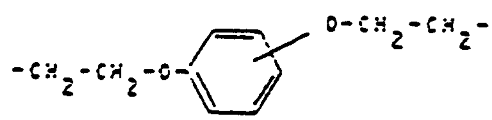

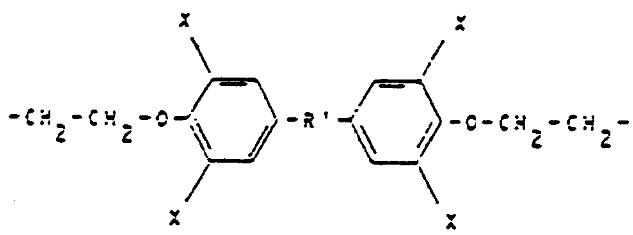

où R' représente un radical choisi parmi $-CH_2-$, $-C(CH_3)_2-$ et -O-, X représente un atome d'hydrogène, de chlore ou de brome, et n vaut 1 ou 2,
en un rapport molaire du carbonate de diallyle au diol contenant un groupe aromatique valant 12/1,
ce produit de réaction étant constitué, pour 80 % à 90 % en poids, du monomère (où n = 1), et pour le reste, d'oligomères (n valant en moyenne 2);
(B) de 15 % à 65 % en poids d'un monomère choisi parmi l'orthophtalate de diallyle, l'isophtalate de diallyle, le téréphtalate de diallyle, le cyanurate de triallyle et l'isocyanurate de triallyle;
(C) de 5 % à 40 % en poids du produit de réaction du carbonate de diallyle et du diéthylèneglycol, présentant la formule :

$CH_2 = CH\text{-}CH_2\text{-}O\text{-}CO\text{-}O\text{-}(R''\text{-}O\text{-}CO\text{-}O\text{-})_n\text{-}CH_2\text{-}CH = CH_2$

dans laquelle R'' représente le radical du diéthylèneglycol et n vaut de 1 à 3,
en un rapport molaire du carbonate de diallyle au diéthylèneglycol valant 2/1,
ce dernier produit de réaction étant constitué, pour 30 % à 40 % en poids, du monomère (où n = 1), et pour le reste, d'oligomères (n valant en moyenne 3);
et de 2 % en poids à 8 % en poids, par rapport au poids total des composants (A), (B) et (C), d'un amorceur de radicaux libres.

2. Composition conforme à la revendication 1, dans laquelle le diol contenant un groupe aromatique est du 1,1-isopropylidène-bis(4,4'-hydroxyéthyl-benzène).

3. Composition conforme à la revendication 1, qui contient de 35 % à 60 % en poids du composant (A), de 25 % à 50 % en poids du composant (B) et de 5 % à 25 % en poids du composant (C).

4. Composition conforme à la revendication 1, dans laquelle la quantité d'amorceur de radicaux libres vaut de 3 % en poids à 7 % en poids, par rapport au poids total des composants (A), (B) et (C).

**5.** Composition conforme à la revendication 1, dans laquelle l'amorceur de radicaux libres est choisi parmi
le peroxy-dicarbonate de di-isopropyle,
le peroxy-dicarbonate de di-cyclohexyle,
le peroxy-dicarbonate de di-sec-butyle,
le peroxyde de dibenzoyle, et
le perbenzoate de tertiobutyle.

**6.** Composition conforme à la revendication 1, à laquelle on a ajouté une quantité maximale de 1 % en poids, par rapport au poids total des composants (A), (B) et (C), d'adjuvants choisis parmi des stabilisants, des agents de démoulage, des pigments, des absorbeurs UV et des absorbeurs IR.

**7.** Procédé de production d'articles optiques hautement réfringents, qui comprend l'étape consistant à faire polymériser une composition telle que définie dans la revendication 1, à une température de 35 ° C à 100 ° C, pendant 2 à 100 heures.

**8.** Articles optiques produits selon le procédé de la revendication 7.

**Revendications pour l'Etat contractant suivant : ES**

**1.** Procédé de préparation d'une composition liquide polymérisable, destinée à la production d'articles optiques hautement réfringents, caractérisé en ce que l'on combine les composants suivants :
(A) de 30 % à 65 % en poids du produit de la réaction du carbonate de diallyle avec un diol contenant un groupe aromatique, présentant la formule :

$$CH_2=CH\text{-}CH_2\text{-}O\text{-}CO\text{-}O\text{-}(R\text{-}O\text{-}CO\text{-}O\text{-})_nCH_2\text{-}CH=CH_2$$

dans laquelle R est un radical d'un diol contenant un groupe aromatique et est choisi parmi

(méta ou para) 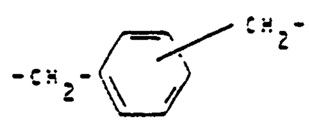

(méta ou para) 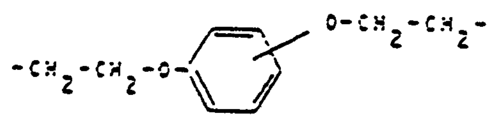

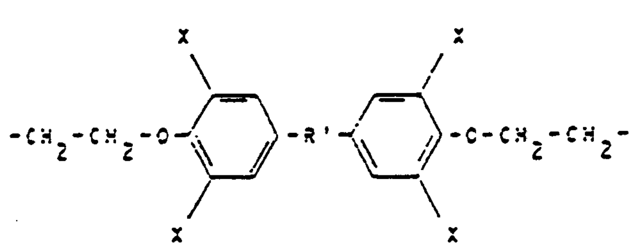

où R' représente un radical choisi parmi $-CH_2-$, $-C(CH_3)_2-$ et -O-, X représente un atome d'hydrogène, de chlore ou de brome, et n vaut 1 ou 2,
en un rapport molaire du carbonate de diallyle au diol contenant un groupe aromatique valant 12/1,
ce produit de réaction étant constitué, pour 80 % à 90 % en poids, du monomère (où n = 1), et pour le reste, d'oligomères (n valant en moyenne 2);
(B) de 15 % à 65 % en poids d'un monomère choisi parmi l'orthophtalate de diallyle, l'isophtalate

de diallyle, le téréphtalate de diallyle, le cyanurate de triallyle et l'isocyanurate de triallyle;
(C) de 5 % à 40 % en poids du produit de réaction du carbonate de diallyle et du diéthylèneglycol, présentant la formule :

$CH_2 = CH\text{-}CH_2\text{-}O\text{-}CO\text{-}O\text{-}(R''\text{-}O\text{-}CO\text{-}O\text{-})_n\text{-}CH_2\text{-}CH = CH_2$

dans laquelle R'' représente le radical du diéthylèneglycol et n vaut de 1 à 3,
en un rapport molaire du carbonate de diallyle au diéthylèneglycol valant 2/1,
ce dernier produit de réaction étant constitué, pour 30 % à 40 % en poids, du monomère (où n = 1), et pour le reste, d'oligomères (n valant en moyenne 3);

et de 2 % en poids à 8 % en poids, par rapport au poids total des composants (A), (B) et (C), d'un amorceur de radicaux libres, et l'on fait polymériser le mélange réactionnel ainsi préparé, à une température de 35 ° C à 100 ° C et pendant 2 à 100 heures.

**2.** Procédé conforme à la revendication 1, caractérisé en ce que le diol contenant un groupe aromatique est du 1,1-isopropylidène-bis(4,4'-hydroxyéthyl-benzène).

**3.** Procédé conforme à la revendication 1, caractérisé en ce que la composition contient de 35 % à 60 % en poids du composant (A), de 25 % à 50 % en poids du composant (B) et de 5 % à 25 % en poids du composant (C).

**4.** Procédé conforme à la revendication 1, caractérisé en ce que la quantité d'amorceur de radicaux libres vaut de 3 % en poids à 7 % en poids, par rapport au poids total des composants (A), (B) et (C).

**5.** Procédé conforme à la revendication 1, caractérisé en ce que l'amorceur de radicaux libres est choisi parmi
le peroxy-dicarbonate de di-isopropyle,
le peroxy-dicarbonate de di-cyclohexyle,
le peroxy-dicarbonate de di-sec-butyle,
le peroxyde de dibenzoyle, et
le perbenzoate de tertiobutyle.

**6.** Procédé conforme à la revendication 1, caractérisé en ce que l'on a ajouté une quantité maximale de 1 % en poids, par rapport au poids total des composants (A), (B) et (C), d'adjuvants choisis parmi des stabilisants, des agents de démoulage, des pigments, des absorbeurs UV et des absorbeurs IR.